# EUROPEAN PATENT APPLICATION

(11) **EP 2 053 372 A2**
(43) Date of publication of application: **29.04.2009**
(21) Application number: 08166103.5
(22) Date of filing: 08.10.2008
(51) Int. Cl.: G01L 9/16

(54) **Means and method of sensing pressure using magnetostrictive electrical conductors**

(30) Priority: 24.10.2007 US 977322
(71) Applicant: Delphi Technologies, Inc., Troy, Michigan 48007 (US)
(72) Inventor: Schroeder, Thaddeus, Rochester Hills, MI 48309 (US); Taye, Elias, Macomb Twp, MI 48042 (US); Thrush, Christopher M., Shelby Township, Macomb County, MI 48316 (US); Lequesne, Bruno, Troy, MI 48084 (US)
(74) Representative: Denton, Michael John

(57) **Abstract**

In one embodiment, a sensor assembly has a sensor housing (17, 38) forming a fluid chamber and a magnetostrictive wire (18, 23, 30) that undergoes stress induced by fluid in the chamber. The wire (18, 23, 30) defines opposed ends, each being associated with a respective terminal. Respective hermetic seals (20) penetrate the housing (17, 38) and are coupled to the respective terminals.

## Description

### Technical Field

The present invention relates generally to magnetostrictive (MS) stress sensors.

### Background of the Invention

Magnetostrictive stress sensors can be used to measure stress such as might be imposed on the sensor by fluid pressure. Typically, an MS stress sensor includes a core made of an MS material, such as a nickel-iron alloy and a coil surrounding the core for establishing axial magnetic AC flux within the core. A magnetic flux carrier made of either MS or non-MS material can be employed provide a return path for the magnetic flux for improved sensor performance. The permeability of the MS core, and thus the impedance of the coil, is a function of stress applied to the core in alignment with the magnetic flux in the core. The coil impedance therefore provides a signal that represents the magnitude of the stress within the core and, hence, is the magnitude of the physical effect causing the stress, such as fluid pressure on the core.

Alternatively, the AC magnetic flux within the MS core can be generated without the use of a flux generating coil surrounding the core, simply by forcing the excitation current to flow directly through the core. This concept is disclosed in the present assignee's co-pending U.S. patent applications nos. 11/244792; 11/064580; 11/280923; and 11/713961, incorporated herein by reference. With this coil-less design, the magnetic flux is to a large degree confined within the MS core, which can be in the shape of a wire, but does not need to have the form of a coil, except for the purpose of compact packaging. There are several advantages to this coil-less MS stress sensor. Large signals are obtained, because the entire core is subjected to stress. There are fewer parts, since the function of the coil, of the core and of the magnetic return path are performed by one part. Thus, without a separate magnetic return path assembly, there are no air-gaps within the core in the path of the magnetic flux. The above applications, however, are focused on sensing compressive stress or tensile stress (both being examples of "deviatoric" stress), whereas the present invention recognizes the desirability of sensing a different stress, namely, hydrostatic stress.

Accordingly, as understood herein, a wire shaped core made of MS material conducting AC current, which generates an AC magnetic field within the core can be provided for the purpose of measuring stress including hydrostatic stress acting upon the core. The present invention understands that such a core, to be useful as a sensor of fluid pressure, must be appropriately juxtaposed with the fluid.

### SUMMARY OF THE INVENTION

A sensor assembly has a sensor housing forming a fluid chamber and a magnetostrictive wire that undergoes stress due to stress induced by fluid in the chamber. The wire defines opposed ends, each being associated with a respective terminal. Respective hermetic seals penetrate the housing and are coupled to the respective terminals.

In non-limiting embodiments the wire can be disposed in fluid in the chamber without support structure between opposed ends of the wire. The wire can be solid or hollow. Alternatively, the wire can be disposed in fluid in the chamber and can be wound around a supporting core. As yet another alternative, the wire can be disposed in fluid in the chamber and can be flush against a supporting substrate that may if desired be juxtaposed with at least one cover to sense hydrostatic stress.

In another aspect, a sensor assembly has a sensor housing forming a fluid chamber, and a magnetostrictive wire undergoes stress induced by fluid in the chamber. First and second sealed openings in the housing provide signal pathways to first and second parts of the wire.

In still another aspect, a sensor is disclosed for outputting a signal representative of stress caused by a source of stress. The sensor includes housing means and magnetostrictive (MS) wire means in the housing means andjuxtaposable with the source of stress such that the source of stress causes stress in the MS means. Seal means penetrate the housing means for providing a signal path to the MS wire means.

The details of the present invention, both as to its structure and operation, can best be understood in reference to the accompanying drawings, in which like reference numerals refer to like parts, and in which:

### BRIEF DESCRIPTION OF THE DRAWINGS

Figure 1 shows a system in accordance with one non-limiting embodiment of the present invention;

Figure 2 is a partial cross-sectional view of a MS wire loop in one example environment;

Figure 3 is a partial cross-sectional view of a MS wire loop in another example environment;

Figure 4 shows a MS wire in a planar configuration, showing the substrate bearing the MS wire in side elevation sandwiched between the cover and substrate;

Figure 4A is a top plan view of the embodiment shown in Figure 4; and

Figure 5 is a side view of the embodiment of Figure 4, showing the substrate disposed in a sensor housing.

### DESCRIPTION OF THE PREFERRED EMBODIMENT

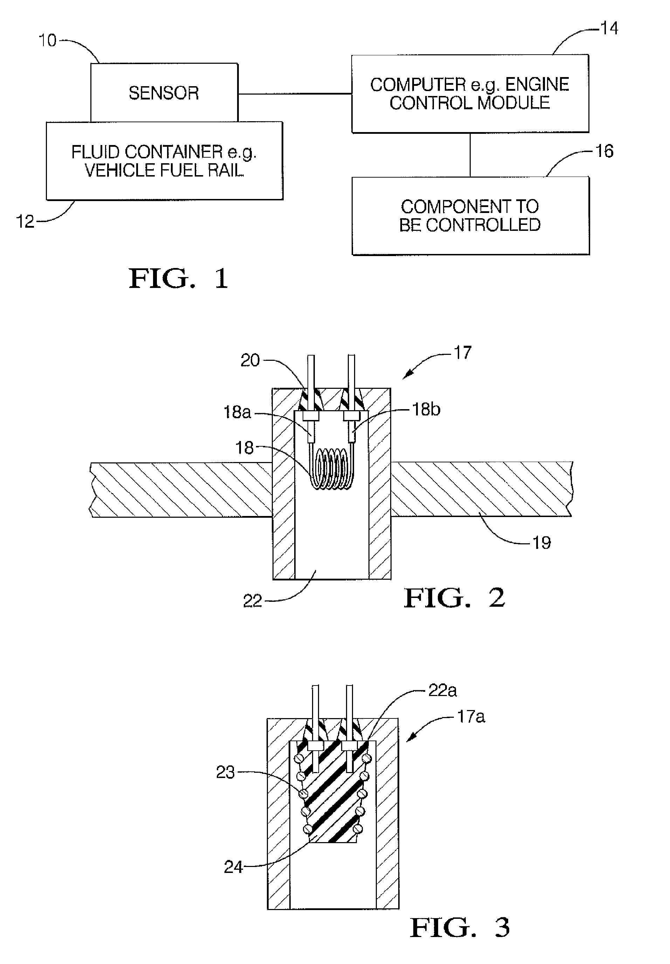

Beginning with Figure 1, a general, non-limiting implementation of an MS stress sensor 10 is shown. The MS stress sensor 10 can be coupled to a source of pressure, such as to a fluid container 12, with the MS stress sensor 10 having the ability to sense fluid pressure (hydrostatic stress) in the fluid container 12 in accordance with principles below. Without limitation, the fluid container 12 may be, e.g., a vehicle fuel rail, a brake fluid tank, combustion chamber, etc., although present principles are not limited to any particular fluid application.

The MS stress sensor 10 is also electronically connected to a computer 14 which may be, without limitation, an engine control module. The computer 14 receives the signal that is output by the sensor 10 for processing the signal to, e.g., correlate the stress as indicated by the signal to a fluid pressure. Further, the computer 14 may be electronically connected to a component 16 such as a fluid pump that may be controlled by the computer 14 based on data received from the MS stress sensor 10.

Now referring to Figure 2, one non-limiting embodiment of the sensor 10 is shown to include a hollow housing 17 that supports coil 18 of a magnetostrictive wire. "Wire" as used herein means an elongated electrical conductor with preferably, although not necessarily, a circular cross-section.

The sensor 10 is mounted within the walls 19 of the pressurized fluid tank, reservoir, line, etc. Respective hermetic seals 20 penetrate the housing 17 and are coupled to respective terminal ends 18a, 18b of the coil 18. The seals 20 can be high strength ceramic, glass, or polymer seals with material resiliency so that their outer surfaces seal against respective openings in the housing 17 and their inner surfaces seal against the respective terminal ends 18a, 18b of the coil 18. In a non-limiting implementation, each seal 20 can be formed with a conically-shaped opening through which a terminal ends 18a, 18b, which can be made of the same magnetostrictive material as the coil, to which it is connected. The opening can be filled with, e.g., epoxy after assembly. As shown, the coil 18 can be made without structural supports between opposed ends or adjacent loops, by the selection of sufficiently thick wire.

While two separate openings are shown for respective terminal ends 18a, 18b, it is to be understood that both terminal ends 18a, 18b, with appropriate insulation, can extend through a single common opening with a single hermetic seal 20.

The inductance of the coil 18 is proportional to the length of the MS wire, making it advantageous to have a relatively longer wire in order to facilitate measurement. The ends of the coil 18 may extend through the seals or may be engaged with separate terminal leads that extend through the seals 20.

There are two embodiments for the coil 18 shown in Figure 2: solid and hollow. In the case of the hollow wire embodiment, the terminal ends 18a, 18b can be internally sealed, before being connected to the seals 20, so that no pressurized fluid 22 in the sensor housing 17 can leak into the interior of the MS wire forming coil 18. The inner volume of the (hollow) wire coil 18 may either be pressurized to standard atmospheric pressure or evacuated. Both inner and outer surfaces of the hollow embodiment preferably define concentric circles in cross-section.

When the MS wire is hollow, it can more easily be contracted than its solid form, making it more sensitive. However, when solid wire is used to form the coil 18, the coil 18 can withstand pressures beyond the expected yielding point of its material. In both cases, the coil 18 may be coated with or housed within an insulating material to avoid short-circuits from one part of the coil 18 to another. The wire may have a rectangular cross-section particularly when solid, or other cross-sections may be used, e.g., trapezoidal. A solid rectangular conductor can be used for deviatoric stress sensing applications, e.g., for use as a brake force sensor.

In Figure 2, the sensor housing 17 is distinct from the wall 19 holding the pressurized fluid. It is also contemplated that the MS wires can be mounted directly on the walls 19 of the fluid reservoir. That is, housing 17 and wall 19 are then one part serving two functions, housing for the sensor and wall for the fluid reservoir, tank, etc. "Housing", therefore, must be understood as any structure serving the function of holding the sensor, as well as possibly other functions.

Figure 3 shows a third embodiment that is in all essential respects identical to the embodiments shown in Figure 2, except that a magnetostrictive coil 23 is wound around a solid supporting bobbin 24. The bobbin 24 can be generally cylindrical or slightly conical and can be made from an electrically non-conducting, and preferably non-magnetic, material. Figure 3 shows that the bobbin 24 can provide further sealing of the terminal ends 18a, 18b because its upper surface 24a can abut the upper inside surface 17a of the sensor housing.

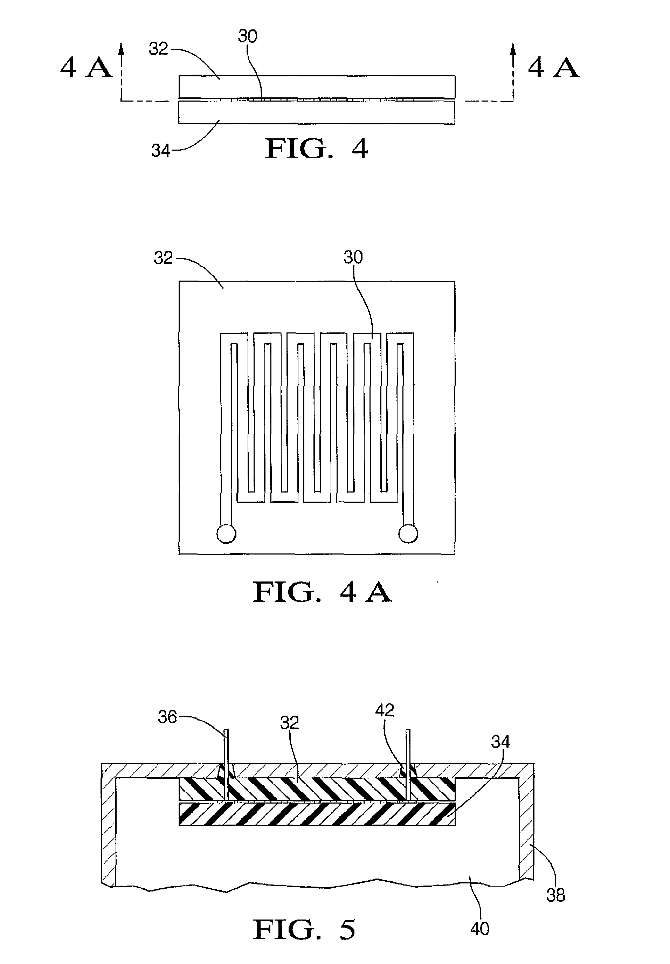

Figures 4 and 5 present a planar embodiment of a support structure for an MS wire. In this instance, a MS wire 30 is disposed onto a flat substrate 32 and a respective flat cover 34 is laid over the wire 18. The substrate 32 may be sandwiched between two covers if desired. The wire 30 can be configured as a coil on the substrate 32 or in another pattern such as the non-limiting staggered straight line configuration shown in Figures 4 and 4A. The cover 34 is placed over the wire 18 in such a way that allows for free fluid flow between the substrate 26 and cover 34, and possibly within the cover 34 itself, it being understood that the cover 34 may be omitted in some embodiments. The substrate 32 and cover 34 may be made from electrically non-conducting and non-magnetic material. The support in the form of the substrate 32 and cover 34 is advantageous in that it is manufactured with a greater ease than the bobbin 24.

In Figures 4, 4A, and 5, terminals 36 are engaged with or formed integrally with respective ends of the wire 30 and rise perpendicularly away from the substrate 32. As shown best in Figure 5, the substrate 32 and, when provided, cover 34 may be disposed in a hollow sensor housing 38 holding a fluid 40 whose pressure is to be sensed. The terminals 36 extend through respective hermetic seals 42 in the housing 38 in a manner as described above.

The materials used for the MS wire may include but are not limited to nickel/iron alloys, pure nickel, galfenol, that is, any material that is both magnetostrictive and electrically conductive. Preferred non-limiting materials include maraging steel (steel with about 18% nickel content) and nickel-iron alloys with 30%-70% nickel content.

While the particular MEANS AND METHOD OF SENSING PRESSURE USING MAGNETOSTRICTIVE ELECTRICAL CONDUCTORS is herein shown and described in detail, it is to be understood that the subject matter which is encompassed by the present invention is limited only by the claims.

## Claims

1. A sensor assembly, comprising:
a sensor housing (17, 38) forming a fluid chamber;
a magnetostrictive electrical conductor (18, 23, 30) undergoing stress induced by fluid in the chamber, the electrical conductor (18, 23, 30) defining opposed ends each associated with a respective terminal; and
at least one hermetic seal (20) penetrating the housing (17, 38) and coupled to at least one of the terminals.

2. The sensor assembly of Claim 1, wherein the electrical conductor is disposed in fluid in the chamber without support structure between adjacent loops of the electrical conductor.

3. The sensor assembly of Claim 1, wherein the electrical conductor is solid or hollow.

4. The sensor assembly of Claim 1, wherein the electrical conductor is disposed in fluid in the chamber and is wound around a supporting core (24).

5. The sensor assembly of Claim 1, wherein the electrical conductor is disposed in fluid in the chamber and is flush against a supporting substrate.

6. The sensor assembly of Claim 1, wherein the conductor is circular in cross-section and senses hydrostatic stress.

7. A sensor assembly, comprising:
a sensor housing (17, 38) forming a fluid chamber;
a magnetostrictive wire (18, 23, 30) undergoing stress induced by fluid in the chamber; and
at least one sealed opening in the housing (17, 38) for providing signal pathways to first and second parts of the wire (18, 23, 30).

8. The sensor assembly of Claim 7, the wire defining opposed ends each associated with a respective terminal, each terminal being associated with a respective opening.

9. The sensor assembly of Claim 7, wherein the wire is disposed in fluid in the chamber without support structure between adjacent loops of the wire.

10. The sensor assembly of Claim 7, wherein the wire is solid or hollow.

11. The sensor assembly of Claim 7, wherein the wire is disposed in fluid in the chamber and is wound around a supporting core (24).

12. The sensor assembly of Claim 7, wherein the wire is disposed in fluid in the chamber and is flush against a supporting substrate.

13. The sensor assembly of Claim 12, wherein the substrate is coupled to a cover.

14. A sensor for outputting a signal representative of stress caused by a source of stress, comprising:
housing means (17, 38);
magnetostrictive (MS) wire means (18, 23, 30) in the housing means (17, 38) and juxtaposable with the source of stress such that the source of hydrostatic stress causes stress in the MS means; and
seal means (20) penetrating the housing means (17, 3 8) for providing a signal path to the MS wire means (18, 23, 30).
